# FASCICULE DE BREVET EUROPEEN

(11) **EP 0 383 651 B1**
(45) Date de publication et mention de la délivrance du brevet: **27.04.1994**
(21) Numéro de dépôt: 90400331.6
(22) Date de dépôt: 07.02.1990
(51) Int. Cl.: F16C 35/07, F16C 19/38, F16C 23/06, F16C 13/02

(54) **Procédé et dispositif de montage d'une partie tournante entre deux paliers sans jeux**
Verfahren und Vorrichtung zur spielfreien Montage eines sich drehenden Teiles zwischen zwei Lagern
Method and device for mounting a rotary part between two bearings without play

(30) Priorité: 14.02.1989 FR 8901882
(43) Date de publication de la demande: 22.08.1990
(73) Titulaire: R.K.S., F-89200 Avallon (FR)
(72) Inventeur: Nicolas, Michel, F-89430 Tanlay (FR); Bourgeois-Jacquet, Pierre, F-89200 Avallon (FR)
(74) Mandataire: Casalonga, Axel

(56) Documents cités:
- FR-A- 2 190 197
- US-A- 1 699 330

## Description

L'invention concerne le montage d'une partie tournante ou oscillante comportant deux bouts d'arbre devant tourillonner dans deux paliers, sans jeu radial ni axial, et devant accepter des charges dans toutes les directions.

La solution classique consiste à supporter l'arbre ou les deux bouts d'arbre par deux roulements radiaux qui supportent les charges radiales, et deux butées axiales qui supportent les charges axiales. Les bagues des roulements radiaux sont emmanchées sur l'arbre et dans l'alésage du support, une des bagues étant montée serrée, et l'autre avec jeu pour annuler les contraintes axiales.

L'ensemble a donc nécessairement un jeu radial dû, d'une part, à l'emmanchement du roulement, et d'autre part, à son jeu interne.

De plus, pour obtenir un montage correct des roulements, il est nécessaire d'usiner les portées avec une grande précision, généralement la qualité six pour l'arbre et la qualité sept pour l'alésage, ce qui n'est pas toujours aisé.

Une solution possible pour diminuer ce jeu est de réaliser un emmanchement serré sur chacune des bagues du roulement, mais un montage correct nécessite des tolérances de réalisation encore plus serrés que précédemment.

Par ailleurs, les butées nécessaires pour supporter les charges axiales sont bloquées entre deux épaulements. Pour réaliser un montage sans jeu axial, il est donc nécessaire de bien ajuster la position relative des épaulements, ce qui ne peut se faire qu'au montage final. Ceci nécessite par conséquent au moins un montage, un démontage et un remontage avec une mise à épaisseur du couvercle, par exemple par adjonction de cales. Chaque montage réalisé est donc particulier et il n'y a pas d'interchangeabilité de l'un à l'autre.

On connaît par ailleurs par le document US-A-1 699 330 un dispositif de montage d'une partie tournante (arbre) sur deux paliers à roulement. Sur ce dispositif, la bague interne de chaque palier est montée sur l'arbre par l'intermédiaire d'un manchon conique dont le serrage assure simultanément le centrage radial de la bague et la précharge du palier à roulement. Les bagues externes des deux paliers, montées mobiles axialement dans l'alésage d'un logement, sont positionnées axialement par deux couvercles opposés dont le serrage est réglable par interposition de cales d'épaisseur. Ce serrage des couvercles se répercute sur la précontrainte des paliers à roulement, mais n'assure pas un blocage radial des bagues externes des paliers à roulement dans le logement.

Le but de l'invention est d'éliminer les inconvénients précédents, c'est-à-dire de réaliser un ensemble plus simple, n'exigeant pas de précision extrême, et d'un montage plus facile, tout en supportant les charges dans toutes les directions, sans jeu ni axial, ni radial.

Sur le dispositif tel que revendiqué de montage d'une partie tournante sur deux paliers à roulement, l'élément externe de chaque palier comporte un moyen de blocage axial dans un logement et la bague interne de chaque palier est montée sur la partie tournante par l'intermédiaire de moyens de blocage de profil conique assurant simultanément le centrage radial de la bague et la, précharge du palier à roulement. Selon l'invention, chaque palier à roulement comporte exclusivement un roulement du type à transmission axiale et radiale des efforts et à ajustage serré des éléments roulants entre un élément externe et une bague interne. L'élément externe de chaque roulement est bloqué dans le logement par un moyen de blocage radial comprenant une cale qui, sur l'un au moins des deux roulements, assure en même temps le blocage axial de l'élément externe dans le logement. Les organes d'actionnement des divers moyens de blocage sont accessibles de l'extérieur de façon que ces derniers puissent être bloqués en position après montage de la partie tournante.

Le dispositif selon l'invention comporte donc, en plus des deux paliers à transmission axiale et radiale des efforts, les moyens de blocage des deux types, axial et radial, agencés l'un et l'autre pour pouvoir être actionnés de l'extérieur une fois que le montage est réalisé.

D'autres particularités de l'invention apparaîtront dans la description qui va suivre d'un mode de réalisation pris comme exemple et représenté sur le dessin annexé, sur lequel :
la figure 1 est une coupe axiale partielle du montage; et
la figure 2 une vue extérieure de ce montage.

On voit sur les figures la partie tournante 1 qui doit pouvoir tourner autour d'un axe 2, matérialisé par deux bouts d'arbre 3 et 4, soit par révolutions complète, soit par simple mouvement d'oscillation, et ceci sans jeu radial ni axial tout en pouvant supporter des charges élevées dans toutes les directions.

Chacun des paliers 5 et 6, recevant respectivement les bouts d'arbre 3 et 4, est constitué exclusivement par un roulement à transmission axiale et radiale des efforts. Dans l'exemple représenté, il s'agit de roulements à double rangées de rouleaux croisés 7 disposés entre une partie externe 8 ou 9, de contour extérieur sensiblement carré, et une bague interne 10 ou 11 de révolution. Toutefois, ces paliers pourraient être de n'importe quelle autre nature, pourvu qu'ils soient capables de supporter des charges radiales et axiales.

La bague intérieure 10 du palier 5 est montée contre la partie tournante 1 au moyen d'une série de vis 12 rattrapant tout jeu axial, et également sur le bout d'arbre 3, par l'intermédiaire d'un manchon conique fendu 13, de type connu, comportant une surface intérieure cylindrique se montant sur le bout d'arbre 3, et une surface extérieure conique, par exemple de pente 1/12, qui se monte dans l'alésage intérieur conique 14 de même pente que comporte la bague intérieure 10.

Conformément à l'invention, l'écrou concentrique 15 permettant le blocage par déplacement axial du manchon conique 13, est disposé de manière à pouvoir être actionné, ainsi que les vis 12, directement de l'extérieur du montage.

Cet actionnement de l'écrou 15, au moyen d'un outillage approprié, incluant par exemple un tendeur hydraulique, permet, par expansion de la bague intérieure 10 :
. de rattraper les jeux internes du roulement, c'est-à-dire les jeux entre les rouleaux croisés et les deux chemins de roulement, respectivement, de la partie externe 8 et de la bague interne 10,
. de centrer la bague 10 sur le bout d'arbre 3, qui est habituelle à ce type de manchon conique, et
. d'accepter des tolérances importantes du bout d'arbre 3.

La bague intérieure 11 du palier 6 est identique à la bague 10 et se monte exactement de la même façon sur le bout d'arbre 4.

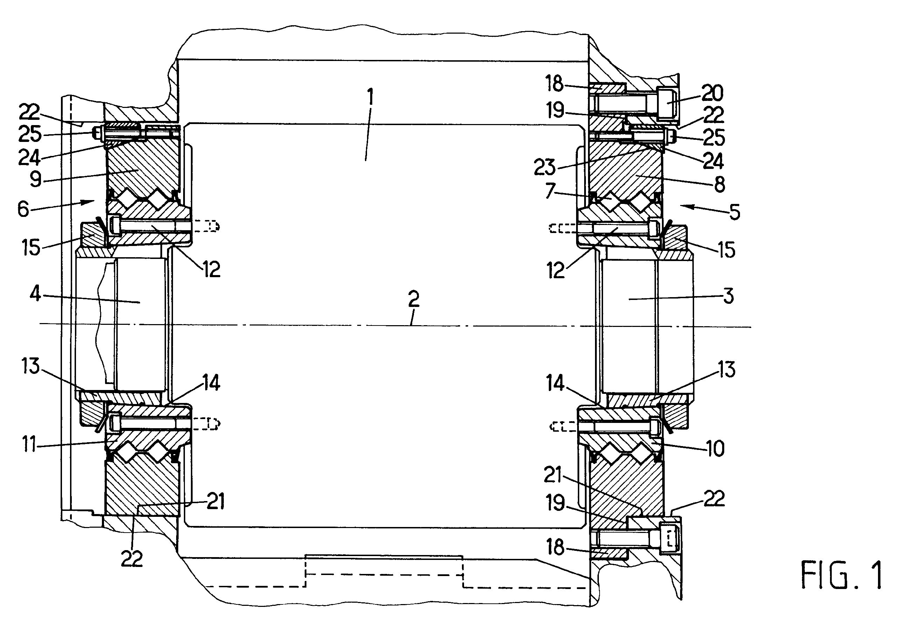

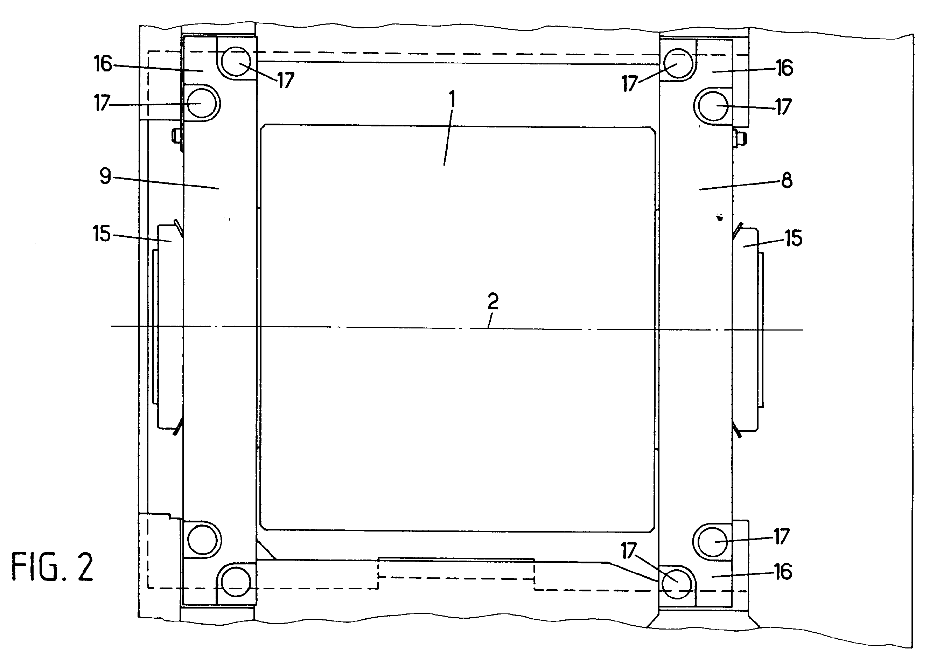

La partie externe 8 du palier 5 comporte dans ses deux angles situés en avant du plan des figures 1 et 2, des saillies de butée transversale 16, destinées à venir s'appuyer et se fixer au moyen de vis 17 sur des épaulements appropriés du logement de palier dans lequel vient se monter cette pièce.

De plus, cette même partie externe 8 comporte le long de deux côtés opposés, des bords transversaux 18 destinés à venir s'appuyer sur des épaulements axiaux 19 que comporte le logement correspondant au palier 5, sous l'effet de vis de blocage axial 20 réparties le long des deux côtés correspondants de cette partie externe 8.

En outre, le long d'un de ses bords, de préférence le bord inférieur, se trouve un épaulement radial 21 venant s'appuyer sur une face plane correspondante 22 du logement du palier 5.

Au contraire, sur le bord opposé, l'épaulement radial 21 est remplacé par un chanfrein en pente douce 23 situé en retrait de la face plane 22 correspondant à ce bord, de manière à ménager la place pour une cale prismatique à section trapézoïdale 24, de pente correspondant à celle du chanfrein 23, et qui peut être bloquée au moyen de vis de blocage axial 25 se vissant dans la partie externe 8.

Le serrage des vis 17, 20 et 25, qui sont toutes accessibles de l'extérieur, permet de fixer et de rattraper tous les jeux axiaux et radiaux de la partie externe 8 du palier 5.

Le palier 6 est conçu de la même manière que le palier 5, excepté qu'il est dépourvu des bords transversaux 18, ce qui lui permet, avant blocage, de coulisser axialement sur la face plane 22 par son épaulement radial 21 qui s'étend sur toute l'épaisseur de la partie 9, alors qu'au contraire le blocage de la cale trapézoïdale 24 par les vis 25 produit non seulement le blocage radial comme précédemment, mais également le blocage axial par action sur l'autre face plane 22.

L'ensemble du montage selon l'invention n'utilise par conséquent qu'un nombre réduit de pièces pouvant être réalisées sans exiger des tolérances sévères, et qui sont de ce fait interchangeables.

Après assemblage de ces diverses pièces, il suffit d'assurer le blocage axial et radial des bagues internes 10 et 11 par serrage des vis 12 et des écrous 15, ainsi que le blocage des vis 20 d'un côté et des vis 25 des deux côtés, pour assurer tout à la fois l'immobilisation en position de tous les éléments avec suppression de tous les jeux, y compris les jeux internes des roulements.

L'absence de tout ajustage final permet non seulement un montage rapide, économique et sûr, mais en outre, assure l'interchangeabilité des pièces pour faciliter la maintenance ou les réparations.

## Revendications

1. Dispositif de montage d'une partie tournante (1,3,4) sur deux paliers à roulement (5,6), l'élément externe (8,9) de chaque palier comportant un moyen (20,24,25) de blocage axial dans un logement et la bague interne (10,11) de chaque palier étant montée sur la partie tournante (1,3,4) par l'intermédiaire de moyen de blocage (13,15) de profil conique assurant simultanément le centrage radial de la bague et la précharge du palier à roulement, caractérisé par le fait que :
- chaque palier à roulement comporte exclusivement un roulement (5,6) du type à transmission axiale et radiale des efforts et à ajustage serré des éléments roulants (7) entre un élément externe (8,9) et une bague interne (10,11);
- l'élément externe (8, 9) de chaque roulement (5,6) est bloqué dans le logement par un moyen de blocage radial (24,25) comprenant une cale qui, sur l'un au moins des deux roulements, assure en même temps le blocage axial de l'élément externe dans le logement; et
- les organes d'actionnement (12,15,17,20,25) des divers moyens de blocage sont accessibles de l'extérieur de façon que ces derniers puissent être bloqués en position après montage de la partie tournante.

2. Dispositif selon la revendication 1, caractérisé par le fait que la cale du moyen de blocage de chaque élément externe (8, 9) dans son logement est une cale prismatique à section trapézoïdale (24) déplacée par des vis transversales (25) et coopérant avec un chanfrein (23) de pente correspondante sur l'un des bords àe l'élément externe.

3. Dispositif selon une des revendications 1 et 2, caractérisé par le fait que le moyen de blocage, de centrage et de précharge de chaque bague interne (10,11) est constitué par un manchon conique (13) coopérant avec un alésage conique (14) de pente correspondante de la bague interne (10,11) et est mis en charge au moyen d'un écrou concentrique (15) actionnable de l'extérieur.

## Patentansprüche

1. Vorrichtung zur Montage eines sich drehenden Teils (1, 3, 4) zwischen zwei Walzlagern (5, 6), wobei das Außenteil (8, 9) jedes Lagers ein Mittel (20, 24, 25) zum axialen Klemmen in einem Sitz aufweist und der Innenring (10, 11) jedes Lagers an dem drehenden Teil (1, 3, 4) mittels Klemmitteln (13, 15) mit konischem Profil befestigt ist, die zugleich die radiale Zentrierung des Rings und die Vorspannung des Wälzlagers gewährleisten,
dadurch gekennzeichnet,
daß jedes Wälzlager ausschließlich aus einem Wälzlager (5, 6) mit axialer und radialer Übertragung der Kräfte und mit fester Einstellung der Wälzkörper (7) zwischen einem Außenteil (8, 9) und einem Innenring (10, 11) besteht; daß das Außenteil (8, 9) jedes Lagers (5, 6) in dem Sitz durch ein Mittel zum radialen Klemmen (24, 25) festgeklemmt wird, das aus einer Beilage besteht, die zumindest bei einem der beiden Wälzlager zugleich das axiale Klemmen des Außenteils in dem Sitz gewährleistet; und
daß die Betätigungsorgane (12, 15, 17, 20, 25) der verschiedenen Klenmmittel von außen so zugänglich sind, daß letztere nach der Montage des drehenden Teils in ihrer Position festgeklemmt werden können.

2. Vorrichtung nach Anspruch 1, dadurch gekennzeichnet, daß die Beilage des Mittels zum Klemmen jedes Außenteils (8, 9) in seinem Sitz aus einer prismaförmigen Beilage mit trapezförmigem Querschnitt (24) besteht, die durch Querschrauben (25) verschoben wird und mit einer entsprechend geneigten Abschrägung (23) an einem der Ränder des Außenteils zusammenwirkt.

3. Vorrichtung nach einem der Ansprüche 1 und 2, dadurch gekennzeichnet, daß das Mittel zum Klemmen, Zentrieren und Vorspannen jedes Innenrings (10, 11) aus einer konischen Hülse (13) besteht, die mit einer konischen Bohrung (14) des Innenrings 10 mit entsprechender Neigung zusammenwirkt, und mittels einer von außen zu betätigenden konzentrischen Mutter (15) unter Belastung gesetzt wird.

## Claims

1. Device for mounting a rotating part (1, 3, 4) on two rolling bearings (5, 6), the outer element (8, 9) of each bearing comprising a means (20, 24, 25) of axial locking in a housing and the inner race (10, 11) of each bearing being mounted on the rotating part (1, 3, 4) by means of locking means (13, 15) having a conical profile ensuring simultaneously the radial centring of the ring and the preloading of the rolling bearing, characterized in that:
- each rolling bearing comprises exclusively a rolling bearing (5, 6) of the type with axial and radial transmission of the forces and tight fitting of the rolling elements (7) between an outer element (8, 9) and an inner race (10, 11);
- the outer element (8, 9) of each rolling bearing (5, 6) is locked in the housing by a radial locking means (24, 25) comprising a shim which, on at least one of the two rolling bearings, ensures at the same time the axial locking of the outer element in the housing; and
- the members (12, 15, 17, 20, 25) for actuating the various locking means are accessible from outside so that the latter can be locked in position after the mounting of the rotating part.

2. Device according to Claim 1, characterized in that the shim of the means for locking each outer element (8, 9) in its housing is a prismatic shim (24) of trapezoidal cross-section which is displaced by transverse screws (25) and co-operates with a chamfer (23), of corresponding slope, on one of the edges of the outer element.

3. Device according to either of Claims 1 and 2, characterized in that the locking, centring and preloading means for each inner race (10, 11) consists of a conical sleeve (13) co-operating with a conical bore (14), of corresponding slope, of the inner race (10, 11) and is loaded by means of a concentric nut (15) actuable from outside.
